Europäisches Patentamt

European Patent Office

Office européen des brevets

(19)

(11) Publication number: **0 096 523**
**A1**

## (12) EUROPEAN PATENT APPLICATION

(21) Application number: 83303096.8

(22) Date of filing: 27.05.83

(51) Int. Cl.³: **G 05 D 16/10**
**B 60 T 8/26**

(30) Priority: 01.06.82 GB 8215912

(43) Date of publication of application:
21.12.83 Bulletin 83/51

(84) Designated Contracting States:
DE FR GB IT NL SE

(71) Applicant: MARTONAIR LIMITED
128 St. Margarets Road
Twickenham TW1 1RJ(GB)

(72) Inventor: Bird, Philip James
c/o MARTONAIR LIMITED St. Margarets Road
Twickenham TW1 1RJ(GB)

(72) Inventor: Boxall, Eric John
c/o MARTONAIR LIMITED St. Margarets Road
Twickenham TW1 1RJ(GB)

(74) Representative: Anderson, John Robert
Browning et al,
WALFORD & HARDMAN BROWN Trinity House Hales
Street
Coventry, CV1 1NP(GB)

(54) Pressure regulator.

(57) A pressure regulator including a valve member (4) to control the transmission of fluid pressure between an inlet (2) to and an outlet (3) from the regulator. The regulator also includes means for controlling the position of the valve member (4) as a result of change in pressure applied to the inlet (2), whereby:

(a) for any input pressure below a predetermind pressure, the valve member (4) is held open sufficiently widely that the input pressure is transmitted past the valve member (4) to the outlet (3) with substantially no pressure drop, the output pressure thereby being substantially equal to the input pressure;

(b) when the input pressure becomes equal to the predetermined pressure, the valve member (4) is closed, thereby to prevent the transmission of pressure to the outlet (3), and

(c) when the input pressure is increased above the predetermined pressure, the valve member (4) is partly-opened to produce a pressure drop, thereby to increase the pressure transmitted past the valve member (4) to the outlet (3) proportionally to but to a value smaller than the input pressure at any instant.

FIG. 2

Croydon Printing Company Ltd.

PRESSURE REGULATOR

The invention relates to a pressure regulator and is particularly concerned with a pressure regulator which for any input pressure up to a predetermined value delivers fluid at substantially said input pressure but which for any input pressure greater than said predetermined value delivers fluid at a regulated pressure proportional to and smaller than said input pressure.

The pressure regulator provided by this invention is particularly concerned with controlling the pressure of compressed air applied to the pneumatic braking system of a vehicle but may have other applications.

When the brakes of a vehicle are applied, weight is transferred to the front wheels and thus there is a reduction in weight acting on the rear wheels and this tends to cause the rear wheels to lock. It is common practice to fit a pressure-limiting valve in the fluid supply line to the rear brakes with a view to overcoming this problem. Such a valve limits the line pressure to a maximum fixed value and so any further increase in line pressure has no further effect on the rear brakes. An object of the invention is to provide a pressure regulator to be fitted in the compressed air supply line to the rear brakes of vehicles having a pneumatic braking system by which, for input pressures up to a predetermined pressure, referred to herein as the "break point", the output pressure is substantially equal to the input pressure and for input pressures higher than the break point, the output pressure is increased more slowly than the input pressure and so the output pressure produces a progressive braking action while minimising the danger of wheel locking.

According to the invention, a pressure regulator includes a valve member to control the transmission of fluid pressure between an inlet to and an outlet from the regulator and means for

0096523

controlling the position of the valve member as a result of change in pressure applied to said inlet, whereby;

(a)     for any input pressure below a predetermined pressure, the valve member is held open sufficiently widely that the input pressure is transmitted past the valve member to said outlet with substantially no pressure drop, whereby the output pressure is substantially equal to said input pressure;

(b)     when the input pressure becomes equal to said predetermined pressure, the valve member is closed, thereby to prevent the transmission of pressure to said outlet, and

(c)     when the input pressure is increased above said predetermined pressure, the valve member is partly-opened to produce a pressure drop, thereby to increase the pressure transmitted past the valve member to the outlet proportionally to but to a value smaller than said input pressure at any instant.

Conveniently the valve member is movable by differential piston means having a first piston area to which the pressure upstream of the valve member is applied in one axial direction of the piston means and a second differential piston area to which the pressure downstream of the valve member is applied in the opposite axial direction of the piston means and spring means arranged to act on the piston means in one or other of said axial directions, whereby;

(a)     at input pressures below said predetermined pressure, the piston means is urged in a direction to hold the valve member widely open by the resultant of said forces acting on the piston means;

(b)     when the input pressure becomes equal to said predetermined pressure, the resultant of said forces acting on the piston means becomes zero, thereby to permit the valve member to close, and

(c)      as the input pressure is increased above said predetermined
         value, the valve member is opened to produce said
         pressure drop as a result of the resultant of said
         forces acting on the piston means increasing from zero
         to a resultant force acting on the piston means in the
         opening direction of the valve member.

The valve member may be provided with further spring means to
ensure that it is moved into its closed position when the
aforesaid resultant of said forces acting on the piston means
becomes zero.

The piston means may be a single piston having opposed end faces
providing the aforesaid first and second piston areas.

Alternatively the piston means may comprise two separate pistons
on which respectively first and second piston areas are provided,
the two pistons being arranged to abut one another directly or to
act one on the other via a resilient transmission means.

The pressure regulator as set out in the five immediately preceding
paragraphs may have inlet and outlet connector means whereby it
can be fitted in the compressed air supply line to the rear
brakes of a vehicle having a pneumatic braking system.

Where the pressure regulator is to be provided for the purpose
as set out in the immediately preceding paragraph, it may include piston
means operable to effect movement of the valve member between
its open and closed positions and having a first face of smaller
area at one end thereof to which the pressure upstream of the
valve member is to be applied and a second face of larger area
at the other end thereof to which the pressure downstream of the
valve member is to be applied and spring means which acts to
move the piston means in the direction in which it holds the valve member open, whereby:

(a)     at input pressures below said predetermined pressure, the piston means is held in a position which it holds the valve member open, the spring force which acts in that direction being greater than the resultant acting in the opposite direction of the fluid forces acting on said first and second faces of the piston means;

(b)     when the input pressure becomes equal to said predetermined pressure, the valve member closes, the spring force being equal to the resultant acting in the opposite direction of the fluid forces acting on said first and second faces of the piston means, and

(c)     when the input pressure is increased above said predetermined value, the valve member is opened, the resultant of the fluid forces acting on said first and second faces of the piston means now acting in the same direction as the spring force.

Conveniently the piston means comprises a pair of pistons which are arranged to abut one another, said first and second faces being provided one on each of said pistons.

By way of example a pressure regulator particularly intended to be connected in the compressed air supply line to the rear brakes of a vehicle having a pneumatic braking system will now be described with reference to the accompanying drawings in which:-

Figure 1 is a graph showing output pressure plotted against input pressure, and

Figure 2 is a section through the pressure regulator.

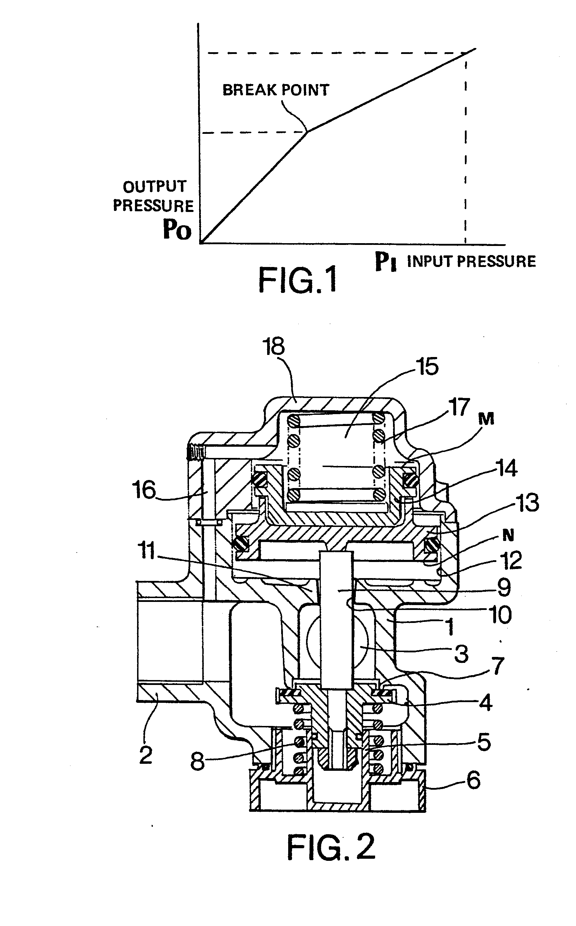

Referring first to Figure 1 it will be seen that for input pressures up to a predetermined inlet pressure, referred to herein as the "break point", the output pressure is substantially equal to the input pressure. As the input pressure is increased through and then above the break point, the corresponding output pressure which is directly proportional to the input pressure is reduced to a value less than the corresponding input pressure. This relationship between input pressure and output pressure continues until the input pressure reaches the final point which corresponds to the maximum input pressure for which the system is designed. Thus it will be readily appreciated from the graph that up to the break point, the pressure applied to the rear brakes of the vehicle is equal to the input pressure and so the braking effect of the rear brakes will be the same as those of the front brakes to which the input pressure is also applied. When the break point has been reached, the pressure applied to the rear brakes is not limited to a constant value as in existing pneumatic braking systems. Instead the output pressure applied to the rear brakes continues to increase porportionally to the input pressure but ay any instant it is less than the input pressure. Therefore although the output pressure continues to increase, it is at any instant less than the corresponding input pressure. Therefore the risk of rear wheel locking is reduced and a progressive braking action is attained, thereby resulting in better braking performance then where a simple pressure limiting valve is fitted in the supply line to the rear brakes, as is employed hitherto.

The regulating valve provided by this invention, and for achieving the performance illustrated in the graph of Figure 1, is shown in section in Figure 2, and comprises a housing 1 having an inlet 2 to which the compressed air supply line is attached and a pair of outlets 3 which are connected to the compressed air delivery lines to the rear brakes at each side of the vehicle. The flow of compressed air between the inlet 2 and the outlets 3 is controlled by a valve member 4 which is guided in a socket 5 in a screwed plug 6 fitted into the housing 1, the valve member 4 being movable toward any away from an annular seat 7 formed within the housing 1. The valve member 4 is urged into its closed position by a light return spring 8 which acts between the valve member 4 and the closure plug 6.

The valve member 4 is arranged to be pushed to an open position in opposition to the return spring 8 by a plunger 9 which is slidable freely through a hole 10 formed in an internal wall 11 in the housing 1 positioned between a portion of the housing 1 downstream of the valve member 4 and communicating with the outlets 3 and a chamber 12 in which a piston 13 is slidable. The piston 13 engages the plunger 9 and so downward movement of the piston 13, as viewed in Figure 2, will move the valve member 4 to an open position against the force exerted by the return spring 8. The piston 13 is abutted by an upper piston 14 which is slidable in a chamber 15 which communicates through a duct 16 with the interior of the housing 1 upstream of the valve member 4 and communicating with the inlet 2. The chamber 15 contains a spring 17 which is stronger than the spring 8 and which acts between an end cover 18 secured to the housing 1 and the piston 14. The pistons 13 and 14 together constitute the aforesaid differential piston means. The first piston area M is provided at the upper end of the piston 14 and the second piston area N is provided by the underneath end of the piston 13. The piston area N is greater than the piston area M. The piston area M is acted upon the input pressure within the chamber 15 which communicates with the inlet 2 through the duct 16. The piston area N is acted upon by the pressure within the chamber 12, this being the output pressure downstream of the valve 4 and which is admitted to the chamber 12 through a connecting hole (not shown)                    in the wall 11.

At pressures below the break point, the downward force acting on the piston 14 and thus on the piston 13 and the valve member 4 is equal to the input pressure multiplied by area M plus the force S of the spring 17 and the upward force acting on the piston 13 is equal to the output pressure multiplied by area N, the valve 4 being open. The force of the light return spring 8 has been ignored.

Because the valve is open, there is no pressure drop through the valve and thus the pressure downstream of the valve member 4, that is the output pressure, is substantially equal to the input pressure. Any other pressure drops have been ignored. Thus the resultant downward force is $S + PM - PN$, the pressure P being both the input and the output pressures, which are equal. This condition applies as the input pressure is increased up to the break point. At that point the upward force acting on the piston 13 becomes equal to the downward force and so the valve closes. However, as the increase in the input pressure continues, the fluid force acting on the piston 14 increases and so the valve 4 will be partly re-opened. There will therefore be a pressure drop in fluid which passes the valve member 4 and so the upward fluid force acting on the valve member 13 will now be $Po \times N$, where Po is the output pressure and this will always be less than the downward force which is $(P_I \times M) + S$, where $P_I$ is the input pressure. As the input pressure continues to be increased up to the final pressure, the output pressure will also continue to be increased in accordance with the portion of the graph in Figure 1 between the break and final points.

The position of the break point, that is the value of said predetermined pressure, and the gradient of the portion of the graph for pressures greater than the predetermined pressure can be varied by selecting different springs 17 of appropriate spring force values S and/or by altering the relation of areas M and N of the two pistons to one another. For example by keeping the piston 13 of area N constant, and selecting a piston 14 of an appropriate area M.

It should be emphasised that the construction of the valve shown in Figure 2 is a preferred form of the valve for the particular application of controlling the compressed air pressure applied to the rear brakes of a vehicle having a pneumatic braking system and that for other applications the valve may be constructed differently, although the function of the valve will remain the same in that up to the break point the output pressure will be substantially equal to the input pressure and above the break point, the output pressure will be proportional but less than the input pressure at any instant.

CLAIMS

1.  A pressure regulator including a valve member to control the transmission of fluid pressure between an inlet to and an outlet from the regulator characterised in that the pressure regulator also includes means for controlling the position of the valve member as a result of change in pressure applied to said inlet, whereby:

    (a)  for any input pressure below a predetermined pressure, the valve member is held open sufficiently widely that the input pressure is transmitted past the valve member to said outlet with substantially no pressure drop, whereby the output pressure is substantially equal to said input pressure;

    (b)  when the input pressure becomes equal to said predetermined pressure, the valve member is closed, thereby to prevent the transmission of pressure to said outlet, and

    (c)  when the input pressure is increased above said predetermined pressure, the valve member is partly-opened to produce a pressure drop, thereby to increase the pressure transmitted past the valve member to the outlet proportionally to but to a value smaller than said input pressure at any instant.

2.  A pressure regulator as claimed in Claim 1 in which the valve member 4 is movable by differential piston means (13,14) having a first piston area (M) to which the pressure upstream of the valve member (4) is applied in one axial direction of the piston means and a second differential piston area (N) to which the pressure downstream of the valve member (4) is applied in the opposite axial direction of the piston means (13, 14)
and spring means (17) arranged to act on the piston means
in one or other of said axial directions, whereby:

(a)    at input pressures below said predetermined pressure,
       the piston means (13,14) is urged in a direction to
       hold the valve member (4) widely open by the resultant
       of said forces acting on the piston means (13, 14);

(b)    when the input pressure becomes equal to said
       predetermined pressure, the resultant of said forces
       acting on the piston means (13, 14) becomes zero,
       thereby to permit the valve member (4) to close, and

(c)    as the input pressure is increased above said
       predetermined value, the valve member (4) is opened
       to produce said pressure drop as a result of the
       resultant of said forces acting on the piston means
       (13, 14) increasing from zero to a resultant force
       acting on the piston means (13, 14) in the opening
       direction of the valve member (4).

3.    A pressure regulator as claimed in Claim 2 including
      further spring means (8) to ensure that the valve member
      is moved into its closed position when the aforesaid
      resultant of said forces acting on the piston means
      (13, 14) becomes zero.

4.    A pressure regulator as claimed in Claim 3 in which the
      piston means is a single piston having opposed end faces
      providing the aforesaid first and second piston areas (M, N).

5.  A pressure regulator as claimed in Claim 3 in which the piston means comprises two separate pistons (13, 14) on which respectively said first and second piston areas (M,N) are provided, the two pistons (13, 14) being arranged to abut one another directly or to act one on the other via a resilient transmission means.

6.  A pressure regulator as claimed in any preceding claim having inlet and outlet connector means (2, 3) whereby the pressure regulator is connected in the compressed air supply line to the rear brakes of a vehicle having a pneumatic braking system.

7.  A pressure regulator as claimed in Claim 6 including means operable to effect movement of the valve member (4) between its open and closed positions and having a first face (M) of smaller area at one end thereof to which the pressure upstream of the valve member (4) is to be applied and a second face (N) of larger area at the other end thereof to which the pressure downstream of the valve member (4) is to be applied and spring means (17) which acts to move the piston means (13, 14) in the direction in which it holds the valve member open, whereby:

    (a) at input pressures below said predetermined pressure, the piston means (13, 14) is held in a position which it holds the valve member (4) open, the spring force which acts in that direction being greater than the resultant acting in the opposite direction of the fluid forces acting on said first and second faces of the piston means (13, 14),

0096523

(b)     when the input pressure becomes equal to said
predetermined pressure, the valve member (4) closes,
the spring force being equal to the resultant acting
in the opposite direction of the fluid forces acting
on said first and second faces of the piston means
(13, 14), and

(c)     when the input pressure is increased above said
predetermined value, the valve member (4) is opened,
the resultant of the fluid forces acting on said
first and second faces of the piston means (13, 14)
now acting in the same direction as the spring
force.

8.     A pressure regulator as claimed in Claim 7 in which the
piston means comprises a pair of pistons which are
arranged to abut one another, said first and second faces
(M, N) being provided one on each of said pistons.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-3 042 125 (NISSAN MOTOR CO.) * Pages 15-20; figure 2 * | 1,2 | G 05 D 16/10 B 60 T 8/26 |
| A | GB-A-2 020 766 (NISSAN MOTOR CO.) * Figures 1, 3; abstract * | 1-4,6, 7 | |
| A | US-A-3 825 303 (YABUTA) | | |
| A | US-A-4 133 584 (OHTA et al.) | | |
| X | DE-A-1 917 793 (AISIN SEIKI CO. LTD.) * Figures 1, 2, 5; pages 11-13 * | 1,2,6, 7 | |
| A | DE-A-2 931 100 (GIRLING MIDLAND - ROSS AIR ACTUATION LTD.) | | TECHNICAL FIELDS SEARCHED (Int. Cl. 3)<br><br>G 05 D 16/00 B 60 T 8/00 |

The present search report has been drawn up for all claims

| Place of search BERLIN | Date of completion of the search 05-09-1983 | Examiner BEYER F |
|---|---|---|